# FASCICULE DE BREVET EUROPEEN

(11) **EP 2 995 758 B1**
(45) Date de publication et mention de la délivrance du brevet: **15.08.2018**
(21) Numéro de dépôt: 15183060.1
(22) Date de dépôt: 28.08.2015
(51) Int. Cl.: E05D 15/06, E05D 15/56, E05D 15/10

(54) **DISPOSITIF DE GUIDAGE DE PORTE COULISSANTE ET ENSEMBLE COMPRENANT UN TEL DISPOSITIF DE GUIDAGE**
FÜHRUNGSVORRICHTUNG FÜR SCHIEBETÜR, UND ANORDNUNG, DIE EINE SOLCHE FÜHRUNGSVORRICHTUNG UMFASST
GUIDING DEVICE FOR SLIDING DOOR AND ASSEMBLY COMPRISING SUCH A GUIDING DEVICE

(30) Priorité: 11.09.2014 FR 1458556
(43) Date de publication de la demande: 16.03.2016
(73) Titulaire: Fermod, 60300 Senlis (FR)
(72) Inventeur: LECOT, Francis, 60129 GLAIGNES (FR)
(74) Mandataire: Lavoix

(56) Documents cités:
- WO-A1-89/04415
- WO-A2-03/052226
- DE-A1- 3 239 127

## Description

La présente invention concerne un dispositif de guidage d'une porte coulissante selon le préambule de la revendication 1. L'invention s'applique particulièrement aux portes coulissantes dites étanches, principalement dans le domaine des chambres froides à destination du secteur agroalimentaire.

De telles portes coulissantes comprennent des joints d'étanchéité qui doivent être plaqués contre l'huisserie d'un panneau de la salle, ou contre le sol de la salle, lorsque la porte est en position fermée.

De telles portes coulissantes sont notamment connues des documents FR 2 982 897 A1, WO 89/04415 A1 et FR 2 936 005 A1. D'autres dispositifs de guidage d'une porte coulissante sont connus des documents WO 03/052226 A2 et DE 32 39 127 A1, ce dernier divulguant un dispositif selon le préambule de la revendication 1. Les portes coulissantes disposent généralement d'un dispositif de translation, situé en partie supérieure de la porte, ainsi que d'un dispositif de guidage situé au sol ou en partie basse de la porte. Le dispositif de guidage accompagne le coulissement de la porte et le plaquage des joints d'étanchéité en position fermée.

Cependant, ce type de porte est fréquemment situé dans des zones de manutention où se déplacent des engins lourds. Les portes encaissent donc régulièrement des chocs relativement importants, notamment en partie basse. Les dispositifs de guidage situés au bas des portes sont donc fréquemment endommagés, notamment par des chocs frontaux dans les portes.

La présente invention a pour but de proposer un dispositif de guidage, notamment pour la partie inférieure d'une porte coulissante, permettant de limiter ou d'éviter les dégradations en cas de choc frontal dans la porte.

A cet effet, l'invention a pour objet un dispositif de guidage du type précité et comprenant les caractéristiques de la revendication 1, dans lequel la butée s'opposant à un déplacement du chariot par rapport au rail est apte à se déformer élastiquement sous l'effet d'un effort selon la direction perpendiculaire à l'axe longitudinal, de manière à permettre une dissociation du chariot et du rail.

Suivant des modes particuliers de réalisation, le dispositif de guidage comporte l'une ou plusieurs des caractéristiques suivantes, prises isolément ou suivant toutes les combinaisons techniques possibles :
- les deux surfaces opposées de la butée sont inclinées par rapport au panneau vertical, d'un angle proche de 45° ;
- le dispositif comprend en outre un taquet porté par un élément parmi le chariot et le patin, le taquet étant emboîté élastiquement avec une encoche portée par l'autre élément parmi le patin et le chariot, le taquet et/ou l'encoche étant aptes à se déformer élastiquement sous l'effet d'un effort selon une direction sensiblement perpendiculaire à l'axe longitudinal ;
- les deux surfaces opposées sont aptes à coulisser l'une contre l'autre selon une direction perpendiculaire à l'axe longitudinal.

L'invention se rapporte également à un ensemble comprenant une porte coulissante sensiblement verticale et un dispositif de guidage tel que décrit ci-dessus, le chariot étant fixé à une moitié inférieure de la porte coulissante.

Suivant des modes particuliers de réalisation, l'ensemble comporte l'une ou plusieurs des caractéristiques suivantes, prises isolément ou suivant toutes les combinaisons techniques possibles :
- l'ensemble comprend en outre un dispositif de translation de la porte coulissante, relié à une partie supérieure de la porte ;
- le dispositif de translation comprend : un deuxième rail destiné à être fixé contre le panneau vertical ; un deuxième chariot fixé à la porte coulissante et comprenant des moyens de coulissement le long du deuxième rail.
- le dispositif de translation définit une trajectoire de la porte coulissante entre une position fermée et une position ouverte, telle que ladite porte est plus proche du panneau et/ou plus basse dans la position fermée que dans la position ouverte.

L'invention sera mieux comprise à la lecture de la description qui va suivre, donnée uniquement à titre d'exemple non limitatif et faite en se référant aux dessins sur lesquels :
- la figure 1 est une vue en perspective, en coupe partielle, d'un ensemble comportant une porte coulissante, un dispositif de guidage de la porte et un dispositif de translation de la porte, selon un mode de réalisation de l'invention, cette vue représentant la porte et le dispositif de guidage ;
- la figure 2 est une vue partielle, en perspective, de l'ensemble de la figure 1, cette vue représentant la porte et le dispositif de translation ;
- la figure 3 est une vue de détail, en coupe partielle, du dispositif de translation de la figure 2 ;
- les figures 4 et 5 sont des vues de détail, en perspective, du dispositif de guidage de la figure 1 ;
- la figure 6 est une vue partielle, en coupe transversale, du dispositif de guidage de la figure 1 ; et
- les figures 7 et 8 sont des vues partielles en coupe transversale du dispositif de guidage de la figure 1, dans deux positions différentes.

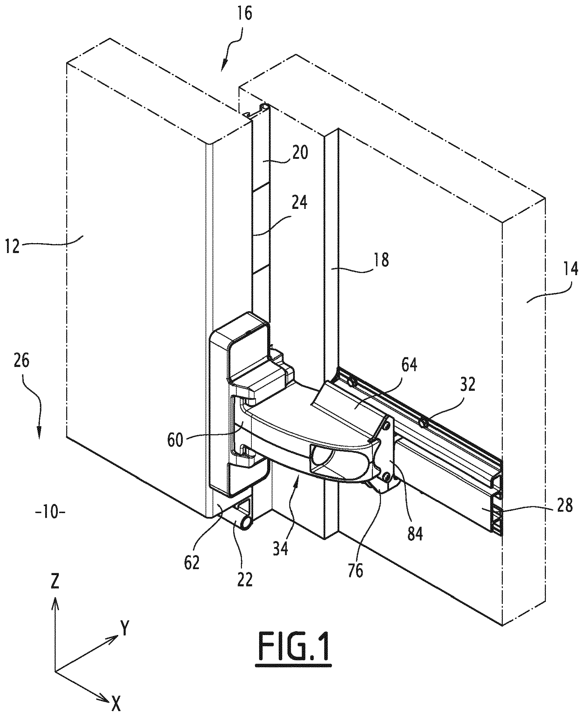

L'ensemble 10 représenté à la figure 1 comporte une porte coulissante 12, sensiblement disposée selon un plan vertical. On considère un repère cartésien (X, Y, Z), X étant l'axe longitudinal, Y étant l'axe transversal et Z étant l'axe vertical. Le plan de la porte 12 est parallèle à (X, Z).

La porte 12 est apte à coulisser selon l'axe longitudinal X par rapport à un panneau 14 parallèle à (X, Z), de manière à ouvrir et fermer une ouverture 16 ménagée dans le panneau 14.

L'ouverture 16 est délimitée par une huisserie 18 solidaire du panneau 14. Des joints 20, 22 sont disposés près des bords 24 d'une surface de la porte 12 orientée vers le panneau 14. En position fermée de la porte 12, les joints 20, 22 sont plaqués contre l'huisserie 18, ou contre le sol 26 au niveau de l'ouverture 16, ladite ouverture 16 étant ainsi obstruée de manière étanche.

L'ensemble 10 comporte en outre un dispositif 27 de guidage de la porte coulissante 12. En particulier, le dispositif 27 est destiné au guidage l'une partie inférieure de la porte 12.

Le dispositif 27 comporte un premier rail 28, s'étendant selon l'axe longitudinal X. Le rail 28 est fixé au panneau 14, du côté orienté vers la porte 12. La fixation du rail 28 est par exemple assurée par des vis 32.

Le dispositif 27 comporte également un premier chariot 34 fixé à une tranche 35 latérale de la porte 12. Préférentiellement, le premier chariot 34 et le premier rail 28 sont disposés au niveau d'une moitié inférieure de la porte 12, c'est-à-dire à une distance du sol 26 inférieure à 50% d'une hauteur de la porte selon l'axe vertical Z. Le premier rail 28 est par exemple disposé à moins de 20 cm du sol 26.

Le premier chariot 34 est apte à coulisser le long du premier rail 28, de manière à guider le coulissement de la porte 12 par rapport au panneau 14. Les moyens de coulissement du chariot 34 le long du rail 28 seront détaillés plus bas.

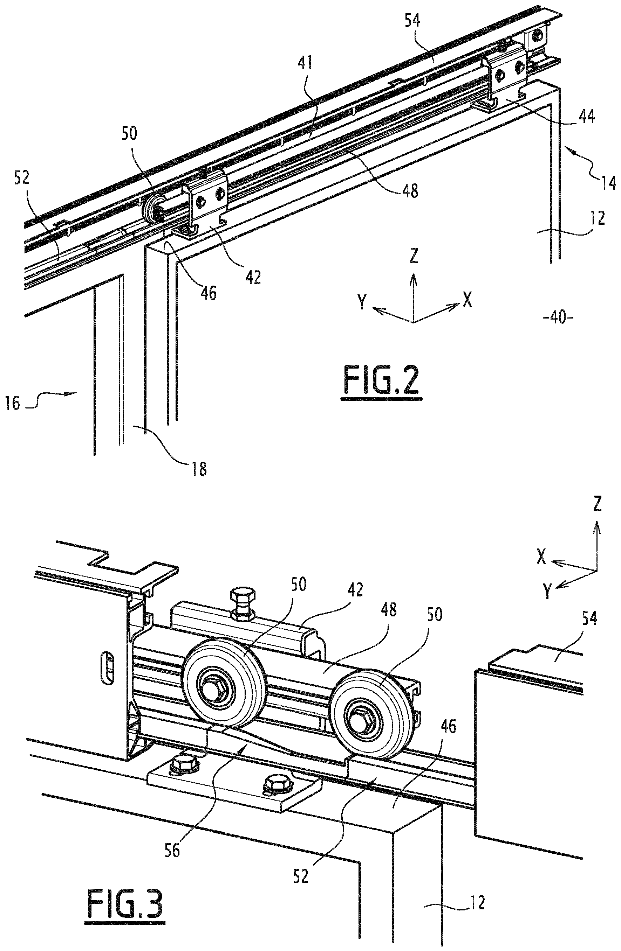

Le dispositif 27 est destiné au guidage du bas de la porte 12 lors du déplacement de ladite porte 12 par coulissement, entre des positions ouverte et fermée. L'ensemble 10 comprend en outre un dispositif 40 de translation relié à une partie supérieure de la porte 12. Le dispositif 40 de translation, représenté aux figures 2 et 3, est connu de l'état de la technique, notamment du document FR 2 936 005 A1.

Le dispositif 40 de translation comporte un deuxième chariot 41, comprenant deux crochets 42, 44 fixés sur une tranche 46 supérieure de la porte 12. Les deux crochets 42, 44 sont reliés par un longeron 48 disposé parallèlement à l'axe longitudinal X. Des galets 50 sont montés aux extrémités du longeron 48. Les galets 50 sont aptes à rouler sur une bande 52 de roulement d'un deuxième rail 54, fixé au panneau 14 au-dessus de l'ouverture 16. Le deuxième rail 54 est disposé parallèlement à l'axe longitudinal X.

Préférentiellement, le dispositif 40 de translation comporte un moteur (non représenté) qui entraîne le déplacement de la porte 12 selon l'axe longitudinal X. La présence du dispositif 40 de translation en haut de la porte, conjointement à celle du dispositif 27 de guidage au bas de la porte, permet une meilleure répartition des efforts et des frottements entre le bas et le haut de la porte 12.

La bande 52 de roulement définit une trajectoire dont la majeure partie est rectiligne, parallèle à l'axe longitudinal X. Cependant, au niveau des positions des galets 50 en position fermée de la porte 12, la bande 52 de roulement comporte des rampes 56. Une rampe 56 est notamment visible à la figure 3 par une coupe partielle du deuxième rail 54.

La rampe 56 définit une trajectoire oblique par rapport à l'axe longitudinal X. Plus précisément, en passant de la position fermée à une position ouverte de la porte 12, le déplacement des galets 50 sur les rampes 56 conduit à une élévation desdits galets 50 selon l'axe vertical Z, ainsi qu'à un éloignement desdits galets 50 par rapport au panneau 14 selon l'axe transversal Y. On entend par « position ouverte » une position de la porte 12 dans laquelle l'ouverture 16 est au moins partiellement accessible.

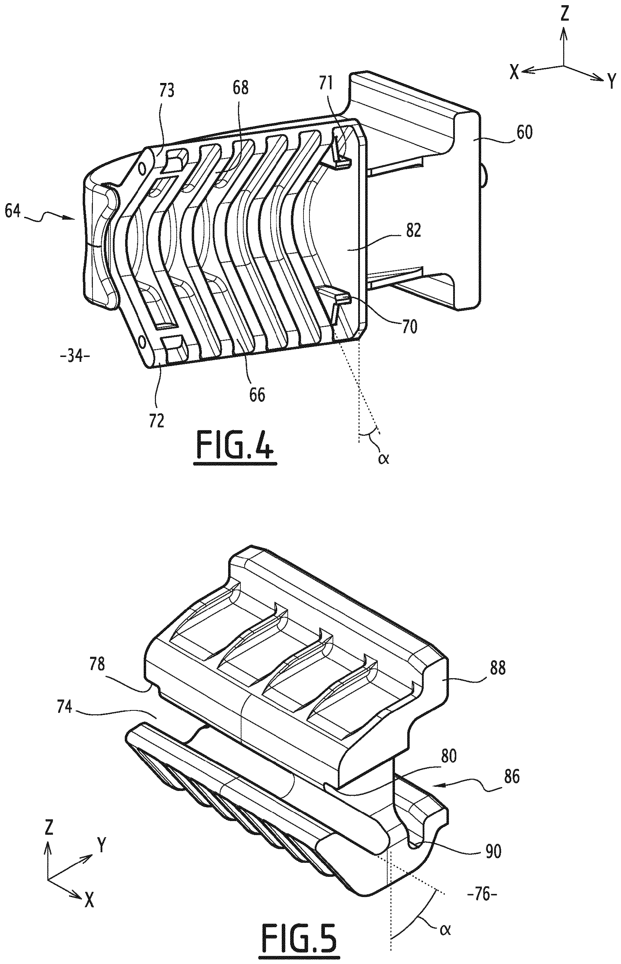

La figure 4 montre une vue détaillée du premier chariot 34 de la figure 1. Le chariot 34 comporte une base 60 reliée à la tranche 35 latérale de la porte 12, comme visible à la figure 1. La tranche 35 latérale est sensiblement disposée dans un plan perpendiculaire à l'axe longitudinal X.

Dans l'exemple de la figure 1, la tranche 35 latérale recevant le chariot 34 se trouve à droite de la porte 12. Toutefois, le chariot 34 comporte un plan de symétrie parallèle à (X, Y). Ainsi, dans une configuration alternative du dispositif 27 de guidage, le chariot 34 tel que décrit ci-après est fixé à gauche de la porte 12.

La base 60 est solidaire d'un guide 64, disposé selon l'axe longitudinal X et comportant deux parois 66, 68, symétriques par rapport au plan (X, Y). Les parois 66, 68 sont sensiblement planes ou rainurées, comme à la figure 4, de sorte à présenter des surfaces d'appui planes.

Les parois 66, 68 sont inclinées d'un angle α par rapport à l'axe vertical Z. L'angle α est compris entre 30° et 60°. Préférentiellement, l'angle α est proche de 45°, c'est-à-dire égal à 45° ± 5°. L'inclinaison des parois 66, 68 implique qu'une section transversale du guide 64 a sensiblement une forme de V couché. Un évasement du V est orienté vers le panneau 14.

Selon un mode de réalisation préférentiel, chacune des parois 66, 68 porte un taquet 70, 71 s'étendant sensiblement selon l'axe transversal Y, en direction du panneau 14. Les taquets 70, 71 sont de préférence proche de bords 72, 73 longitudinaux des parois 66, 68. Dans l'exemple de la figure 4, les taquets 70, 71, symétriques par rapport à (X, Y), sont disposés proches d'une extrémité du guide 64 selon l'axe longitudinal X.

Le guide 64 est réalisé dans un matériau plastique tel qu'un polyamide ou un polyéthylène, afin de présenter un compromis satisfaisant entre rigidité et déformabilité élastique.

La paroi 66 la plus basse est engagée dans une rainure 74 ménagée dans un patin 76, ledit patin étant représenté sur la figure 5. La rainure 74 a une forme complémentaire de celle de la paroi 66. Plus précisément, la rainure 74 est sensiblement disposée selon un plan parallèle à l'axe longitudinal X et incliné d'un angle α par rapport à l'axe vertical Z, l'angle α étant tel que défini ci-dessus.

Selon le mode de réalisation préférentiel ci-dessus, le patin 76 comporte une première encoche 78 apte à s'emboîter élastiquement avec le taquet 70 lorsque la paroi 66 est partiellement engagée dans la rainure 74. Du côté opposé selon l'axe longitudinal X, le patin 76 comporte une seconde encoche 80, symétrique de la première encoche 78 par rapport à (Y, Z). La seconde encoche 80 est destinée à s'emboîter élastiquement avec le taquet 71 de la paroi 68 en cas de montage du dispositif 27 dans l'autre configuration, avec le chariot 34 à gauche de la porte 12.

A une extrémité selon l'axe longitudinal X, le guide 64 présente une première butée 82 axiale, sensiblement disposée selon (Y, Z). Comme visible à la figure 1, un capot 84 est fixé au guide 64 pour former une seconde butée axiale, opposée à la première butée 82. Les butées 82, 84 axiales s'opposent à une sortie de la paroi 66 hors de la rainure 74 par coulissement selon l'axe longitudinal X.

Du côté opposé à la rainure 74 par rapport à (X, Z), le patin 76 présente une cavité 86, disposée selon l'axe longitudinal X et de section transversale sensiblement en U. La cavité 86 a une forme complémentaire de celle du premier rail 28. Le patin 76 est destiné à s'emboîter sur, et à glisser le long du rail 28 selon l'axe longitudinal X. Des butées 88, 90, situées aux bords longitudinaux de la cavité 86, s'opposent à une dissociation du patin 76 et du rail 28 par traction selon les axes transversal Y et vertical Z.

Le patin 76 est préférentiellement réalisé en polyoxyméthylène (POM), caractérisé par un faible coefficient de frottement. En variante, le patin 76 est réalisé en un autre matériau plastique, comme un polypropylène ou un polyamide apte à amortir les chocs.

De préférence, le guide 64 et le patin 76 sont réalisés dans des matériaux différents pour faciliter leur coulissement l'un par rapport à l'autre.

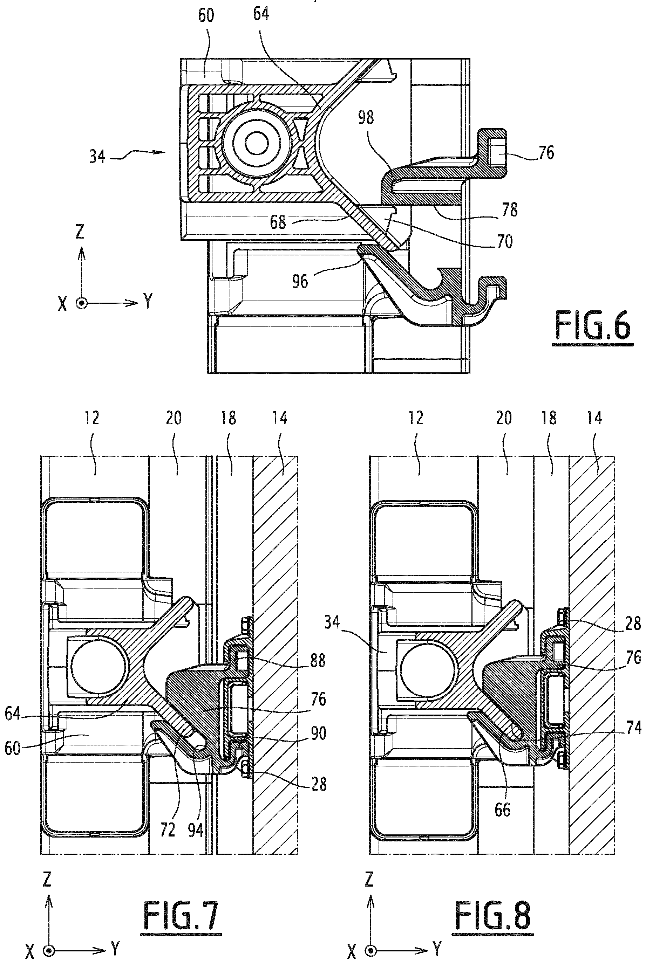

Un procédé de fonctionnement de l'ensemble 10 va maintenant être décrit. On considère que la porte 12 est ouverte et en cours de coulissement par rapport au panneau 14 vers sa position fermée. La paroi 66 du guide 64 est alors partiellement engagée dans la rainure 74 du patin, comme visible à la figure 7. Plus précisément, le bord 72 longitudinal de la paroi 66 est distant d'un fond 94 de la rainure 74.

Dans un premier cas considéré, la porte 12 subit une légère poussée selon l'axe transversal Y dans le sens allant du panneau 14 vers la porte 12. La paroi 66 et la rainure 74 étant inclinées par rapport à l'axe transversal Y, les frottements entre ladite paroi 66 et ladite rainure 74 suffisent à empêcher la dissociation du guide 64 et du patin 76.

En cas de choc un peu plus important dans le même sens, l'énergie absorbée par la porte 12 conduit à une légère déformation élastique du guide 64 et/ou du patin 76. L'énergie provoque également un faible pivotement de la porte 12 autour d'un axe parallèle à X et sensiblement situé au niveau du longeron 48 ou du deuxième rail 54. Un tel pivotement est autorisé, dans une certaine mesure, par des jeux entre les différents éléments du dispositif 40 de translation.

Ledit pivotement de la porte 12, associé à la déformation élastique du guide 64 et/ou du patin 76, se traduit par une montée de la paroi 66 le long de la pente formée par la rainure 74.

Dans le cas où le guide 64 ne comporte pas de taquet 70, 71, l'énergie d'un choc relativement faible peut suffire à faire sortir de la rainure 74 le bord 72 longitudinal de la paroi 66. Le chariot 34 se trouve alors dissocié du patin 76, qui est lui-même maintenu sur le rail 28 par les butées 88, 90. L'énergie du choc subi a été dissipée par déformation élastique, sans dégradation des pièces du dispositif 27. Pour remettre l'ensemble 10 en état de fonctionnement, il suffit alors de remonter le guide 64 sur le patin 76.

Dans le cas où le guide 64 comporte un taquet 70, la montée de la paroi 66 le long de la pente amène le taquet 70 au contact des lèvres 96, 98 de la rainure, comme visible sur la figure 6 selon une coupe transversale au niveau de l'encoche 78.

Dans le cas d'un choc modéré, les lèvres 96, 98 retiennent le taquet 70 à l'intérieur de la rainure 74 et empêchent la dissociation du guide 64 d'avec le patin 76. Dans le cas d'un choc plus important, la déformation élastique du patin 76 conduit à l'écartement des lèvres 96, 98 et à l'éjection du taquet 70. Le chariot 34 se trouve alors dissocié du patin 76.

La présence ou non d'un taquet 70 permet donc de moduler l'énergie de choc nécessaire à la dissociation du chariot 34 et du patin 76. Il en est de même pour la valeur de l'angle α et la profondeur de la rainure 74.

Le dispositif 27 permet de dissiper l'énergie des chocs frontaux les plus importants dans la porte 12, par dissociation du chariot 34 et du patin 76. Les assemblages du patin 76 avec le premier rail 28, dudit rail 28 avec le panneau 14 et du chariot 34 avec la porte 12, ne risquent donc pas d'être arrachés ou abîmés par le choc.

Dans le cas de chocs plus faibles, ne risquant pas d'endommager le dispositif 27, le guide 64 est retenu dans la rainure 74 du patin et la porte 12 est maintenue en place.

L'utilisation d'un patin 76 intermédiaire permet de dissocier d'une part la butée déformable en cas de choc, formée par la paroi 66 et la rainure 74, et d'autre part la partie glissant sur le premier rail 28, formée par la cavité 86. Le dispositif 27 tel que décrit ci-dessus présente également l'avantage d'améliorer le guidage de la porte 12 vers sa position fermée. On considère que le guide 64 est monté sur le patin 76, comme à la figure 7, et que la porte 12 arrive à proximité de sa position de fermeture. Les galets 50 du second dispositif 40 de guidage s'engagent sur les rampes 56 du deuxième rail 54. La porte 12 poursuivant son déplacement selon l'axe longitudinal X, les galets 50 se rapprochent du panneau 14 selon l'axe transversal Y, ainsi que du sol 26 selon l'axe vertical Z. La porte 12 a donc une trajectoire oblique dans le plan (Y, Z).

Cette trajectoire oblique est accompagnée par une descente de la paroi 66 du chariot 34, le long de la pente formée par la rainure 74. Lorsque les galets 50 se déplacent sur les rampes 56 vers la position fermée de la porte 12, le bord 72 longitudinal de la paroi 66 se rapproche du fond 94 de la rainure 74. En position fermée, le bord 72 est par exemple au contact du fond 94, comme visible à la figure 8.

Le déplacement du chariot 34 par rapport au patin 76 accompagne donc le déplacement du bas de la porte 12 vers sa position fermée, ce qui contribue à plaquer convenablement les joints 20, 22 contre l'huisserie 18 et le sol 26 lors de la fermeture de la porte 12.

De préférence, la trajectoire oblique de la porte 12 dans le plan (Y, Z), définie par les rampes 56, correspond à une pente d'angle sensiblement égal à l'angle α tel que défini ci-dessus.

Dans le cas où la trajectoire définie par les rampes 56 a une pente légèrement différente de l'angle α, la paroi 66 coopère avec la rainure 74 pour un effet de came, en rectifiant la trajectoire du bas de la porte.

Le dispositif 27 de guidage permet de limiter ou d'éviter les dégradations de l'ensemble 10 en cas de choc frontal dans la porte 12, ainsi que d'améliorer l'étanchéité de la porte en position fermée.

## Revendications

1. Dispositif (27) de guidage d'une porte coulissante (12), comprenant :
- un premier rail (28) destiné à être fixé contre un panneau (14) vertical, le premier rail s'étendant selon un axe longitudinal (X),
- un premier chariot (34) destiné à être fixé à la porte, le premier chariot étant muni de moyens (76) de coulissement le long du premier rail,
les moyens de coulissement comprenant une butée (66, 74) s'opposant à un déplacement du chariot par rapport au rail selon une direction (Y) perpendiculaire à l'axe longitudinal (X),
la butée étant apte à se déformer élastiquement sous l'effet d'un effort selon la direction (Y) perpendiculaire à l'axe longitudinal, de manière à permettre une dissociation du premier chariot et du premier rail,
la butée étant formée de deux surfaces (66, 74) opposées, l'une (66) des deux surfaces étant reliée au premier chariot (34) et l'autre (74) des deux surfaces étant reliée au premier rail (28), ledit dispositif étant **caractérisé en ce que**
les moyens de coulissement comprennent un patin (76) emboîté au premier rail et apte à coulisser le long dudit premier rail, l'une (66) des deux surfaces opposées de la butée étant portée par le premier chariot et l'autre (74) des deux surfaces opposées étant portée par le patin, les deux surfaces (66, 74) opposées étant inclinées par rapport au panneau vertical, d'un angle (α) compris entre 30° et 60°.

2. Dispositif selon la revendication 1, dans lequel les deux surfaces (66, 74) opposées sont inclinées par rapport au panneau vertical, d'un angle (α) proche de 45°.

3. Dispositif selon la revendication 1 ou la revendication 2, comprenant en outre un taquet (70, 71) porté par un élément parmi le premier chariot (34) et le patin (76), le taquet étant emboîté élastiquement avec une encoche (78, 80) portée par l'autre élément parmi le patin et le premier chariot, le taquet et/ou l'encoche étant aptes à se déformer élastiquement sous l'effet d'un effort selon une direction sensiblement perpendiculaire à l'axe longitudinal (X).

4. Dispositif selon l'une des revendications 1 à 3, dans lequel les deux surfaces (66, 74) opposées sont aptes à coulisser l'une contre l'autre selon une direction perpendiculaire à l'axe longitudinal (X).

5. Ensemble (10) comprenant une porte coulissante (12) sensiblement verticale et un dispositif (27) de guidage selon l'une des revendications précédentes, le premier chariot (34) étant fixé à une moitié inférieure de la porte coulissante.

6. Ensemble selon la revendication 5, comprenant en outre un dispositif (40) de translation de la porte coulissante (12), relié à une partie supérieure de la porte.

7. Ensemble selon la revendication 6, dans lequel le dispositif (40) de translation comprend :
- un deuxième rail (54) destiné à être fixé contre le panneau (14) vertical,
- un deuxième chariot (41) fixé à la porte coulissante (12) et comprenant des moyens (50) de coulissement le long du deuxième rail.

8. Ensemble selon l'une des revendications 6 ou 7, dans lequel le dispositif (40) de translation définit une trajectoire (52, 56) de la porte coulissante (12) entre une position fermée et une position ouverte, telle que ladite porte est plus proche du panneau (14) et/ou plus basse dans la position fermée que dans la position ouverte.

## Patentansprüche

1. Vorrichtung (27) zum Führen einer Schiebetür (12), aufweisend:
- eine erste Schiene (28), die vorgesehen ist, um an einer vertikalen Platte (14) befestigt zu sein, wobei sich die erste Schiene entlang einer Längsachse (X) erstreckt,
- einen ersten Schlitten (34), der vorgesehen ist, um an der Tür befestigt zu sein, wobei der erste Schlitten mit Mitteln (76) zum Gleiten entlang der ersten Schiene ausgestattet ist,
wobei die Mittel zum Gleiten einen Anschlag (66, 74) aufweisen, der einer Bewegung des Schlitten relativ zu der Schiene entlang einer Richtung (Y) senkrecht zu der Längsachse (X) entgegenwirkt,
wobei der Anschlag in der Lage ist, sich unter der Einwirkung einer Kraft entlang der Richtung (Y) senkrecht zu der Längsachse zu verformen, um ein Entkoppeln des ersten Schlittens und der ersten Schiene zu ermöglichen,
wobei der Anschlag aus zwei entgegengesetzten Flächen (66, 74) gebildet ist, wobei die eine (66) der beiden Flächen mit dem ersten Schlitten (34) verbunden ist und die andere (74) der beiden Flächen mit der ersten Schiene (28) verbunden ist,
wobei die Vorrichtung **dadurch gekennzeichnet ist, dass** die Mittel zum Gleiten eine Kufe (76) aufweisen, die an die erste Schiene ineinandergreifend angefügt ist und in der Lage ist, entlang der ersten Schiene zu gleiten, wobei die eine (66) der beiden entgegengesetzten Flächen des Anschlags von dem ersten Schlitten getragen wird und die andere (74) der beiden entgegengesetzten Flächen von der Kufe getragen wird, wobei die beiden entgegengesetzten Flächen (66, 74) bezüglich der vertikalen Platte in einem Winkel (α) geneigt sind, der zwischen 30° und 60° beträgt.

2. Vorrichtung gemäß Anspruch 1, wobei die beiden entgegengesetzten Flächen (66, 74) bezüglich der vertikalen Platte in einem Winkel (α) von nahe 45° geneigt sind.

3. Vorrichtung gemäß Anspruch 1 oder Anspruch 2, ferner aufweisend einen Ansatz (70, 71), der von einem Element von dem ersten Schlitten (34) und der Kufe (76) getragen wird, wobei der Ansatz mit einer Aussparung (78, 80), die von dem anderen Element von der Kufe und dem ersten Schlitten getragen wird, elastisch ineinandergreifend zusammengefügt ist, wobei der Ansatz und/oder die Aussparung in der Lage sind, sich unter der Einwirkung einer Kraft entlang einer Richtung im Wesentlichen senkrecht zu der Längsachse (X) elastisch zu verformen.

4. Vorrichtung gemäß einem der Ansprüche 1 bis 3, wobei die beiden entgegengesetzten Flächen (66, 74) in der Lage sind, entlang einer Richtung senkrecht zu der Längsachse (X) gegeneinander zu gleiten.

5. Einrichtung (10), aufweisend eine im Wesentlichen vertikale Schiebetür (12) und eine Vorrichtung (27) zum Führen gemäß einem der vorhergehenden Ansprüche, wobei der erste Schlitten (34) an einer unteren Hälfte der Schiebetür befestigt ist.

6. Einrichtung gemäß Anspruch 5, ferner eine Vorrichtung (40) zum Translationsbewegen der Schiebetür (12) aufweisend, die mit einem oberen Abschnitt der Tür verbunden ist.

7. Einrichtung gemäß Anspruch 6, wobei die Vorrichtung (40) zum Translationsbewegen aufweist:
- eine zweite Schiene (54), die vorgesehen ist, um an der vertikalen Platte (14) befestigt zu sein,
- einen zweiten Schlitten (41), der an der Schiebetür (12) befestigt ist und Mittel (50) zum Gleiten entlang der zweiten Schiene aufweist.

8. Einrichtung gemäß einem der Ansprüche 6 oder 7, wobei die Vorrichtung (40) zum Translationsbewegen eine Bahn (52, 56) der Schiebetür (12) zwischen einer Geschlossen-Position und einer Offen-Position definiert, so dass die Tür in der Geschlossen-Position näher bei der Platte (14) und/oder tiefer liegt als in der Offen-Position.

## Claims

1. A guiding device (27) for guiding a sliding door (12), comprising:
- a first rail (28) designed to be fastened against a vertical panel (14), the first rail extending along a longitudinal axis (X),
- a first carriage (34) designed to be fastened to the door, the first carriage being provided with means (76) for sliding along the first rail,
the sliding means comprising a stop (66, 74) opposing the movement of the carriage relative to the rail in a direction (Y) perpendicular to the longitudinal axis (X),
said stop being able to deform elastically under the effect of a force in the direction (Y) perpendicular to the longitudinal axis, so as to allow a separation between the first carriage and the first rail,
wherein the stop is formed by two opposite surfaces (66, 74), one (66) of the two surfaces being connected to the first carriage (34) and the other (74) of two surfaces being connected to the first rail (28),
said device being **characterized in that** the sliding means comprise a pad (76) fitted in the first rail and able to slide along said rail, one (66) of the two opposite surfaces of the stop being supported by the carriage and the other (74) of the two opposite surfaces being supported by the pad, wherein the two surfaces are inclined relative to the vertical panel, by an angle (α) comprised between 30° and 60°.

2. The device according to claim 1, wherein the two opposite surfaces (66, 74) are inclined relative to the vertical panel, by an angle (α) close to 45°.

3. The device according to claim 1 or claim 2, further comprising a latch (70, 71) supported by an element from among the first carriage (34) and the pad (76), the latch being elastically fitted with a notch (78, 80) supported by the other element among the pad and the first carriage, the latch and/or the notch being able to deform elastically under the effect of a force in a direction substantially perpendicular to the longitudinal axis (X).

4. The device according to claim 2, wherein the two opposite surfaces (66, 74) are able to slide against one another in a direction perpendicular to the longitudinal axis (X).

5. An assembly (10) comprising a substantially vertical sliding door (12) and a guide (27) according to one of the preceding claims, the first carriage (34) being fastened to a lower half of the sliding door.

6. The assembly according to claim 5, further comprising a translation device (40) for the sliding door (12), connected to an upper part of the door.

7. The assembly according to claim 6, wherein the translation device (40) comprises:
- a second rail (54) designed to be fastened against the vertical panel (14),
- a second carriage (41) fastened to the sliding door (12) and comprising means (50) for sliding along the second rail.

8. The assembly according to claim 6 or claim 7, wherein the translation device (40) defines a trajectory (52, 56) of the sliding door (12) between a closed position and an open position, such that said door is closer to the panel (14) and/or lower in the closed position than in the open position.
